# EUROPEAN PATENT SPECIFICATION

(11) **EP 3 651 016 B1**
(45) Date of publication and mention of the grant of the patent: **29.05.2024**
(21) Application number: 18829070.4
(22) Date of filing: 11.06.2018
(51) Int. Cl.: G06F 8/65, G06F 21/57

(54) **SOFTWARE UPDATE DEVICE**
SOFTWARE-AKTUALISIERUNGSVORRICHTUNG
DISPOSITIF DE MISE À JOUR DE LOGICIEL

(30) Priority: 04.07.2017 JP 2017131130
(43) Date of publication of application: 13.05.2020
(73) Proprietor: NEC Communication Systems, Ltd., Minato-ku Tokyo 108-0073 (JP)
(72) Inventor: AUST, Stefan, Tokyo 108-0073 (JP)
(74) Representative: Vossius & Partner Patentanwälte Rechtsanwälte mbB
(86) International application number: PCT/JP2018/022274
(87) International publication number: WO 2019/009020

(56) References cited:
- WO-A1-2005/059862
- JP-A- 2005 085 054
- JP-A- 2012 018 657
- JP-A- 2016 224 898
- JP-A- 2017 097 620
- US-A1- 2009 119 657
- US-A1- 2016 278 013
- US-A1- 2016 278 013

## Description

### TECHNICAL FIELD

The present invention relates to a software update device, a software update method for an electronic device, a server device, a software update method for a server device, and a recording medium.

### BACKGROUND ART

Various types of Software Updates Over-The-Air (SOTA) for updating software of an electronic control unit (ECU) mounted on a vehicle by wireless communication have been proposed.

For example, Patent Literature 1 describes a method of updating, by an information management base station apparatus, software of a plurality of ECUs mounted on vehicles under control thereof by wireless communication (hereinafter referred to as first related art). In the first related art, the information management base station apparatus (hereinafter referred to as a base station) and a vehicle under control thereof perform bidirectional wireless communication for software update of the ECU. Wireless communication is performed bidirectionally through satellite communication such as S-band satellite communication or broadcasting system, dedicated narrow-band communication such as Dedicated Short Range Communication (DSRC), or a mobile phone network using a public network. The base station first checks presence or absence of a target ECU, with respect to every vehicle that has woken up from a sleep state by an update request from the base station. Then, the base station selects an ECU that is an update target according to a reply from the woken-up vehicle, and checks whether or not update can be made in the woken-up vehicle. The base station determines that the vehicle is in a state where update can be made when the ignition switch of the vehicle is on, the parking brake switch is on, the drive position of the automatic transmission is P range, and the vehicle speed is zero. Then, when the base station determines that the woken-up vehicle is in a state where update can be made on the basis of the reply from the woken-up vehicle, the base station performs update to transmit data by dividing the update content into packets for each ECU and transmitting data to the update target ECU.

Patent Literature 2 describes a method in which update conditions for updating software of an ECU by wireless communication are dynamically changeable (hereinafter referred to as second related art). In the second related art, a condition for software update by wireless communication is that a vehicle is present at a predetermine location such as near home (home parking, for example), a dealer, a repair shop, or the like. The position of the vehicle is detected by a position acquisition sensor such as Global Positioning System (GPS). Further, home position information (for example, address) in input by the user via a user interface. Patent Literature 2 also describes that the time is within a predetermined time period is also a condition for software update by wireless communication.

US 2009/119657 A1 discloses a system of updating software of an on-board device via a wireless network, and a method of preventing illegal access and safely updating software of an on-board device by performing encoded data transmission/reception, authentication sequence, and the like between the on-board device and a server device.

US 2016/278013 A1 relates generally to wireless communication, and more specifically to a physical (PHY) layer for an ultra-low power wireless receiver.

Patent Literature 1: JP 4361902 B
Patent Literature 2: JP 2016-218932 A

### SUMMARY

In the first related art, it is possible to wake a vehicle up and update software of the ECU by wireless communication even when the vehicle is in any place. As described above, when wireless communication for software update can be made even when the vehicle is in any place, there is a risk of unauthorized access by a malicious third party.

In the second related art, as software update is allowed under the condition that the vehicle is present at a predetermined location, it seems that a risk of unauthorized access may be low. However, in the second related art, the vehicle can perform wireless communication with the outside even when the vehicle is in any place so that it can receive an update notice coming from the outside randomly. Therefore, even in the second related art, there is a risk of unauthorized access by a malicious third party.

An exemplary object of the present invention is to provide a software update device that solves the above-described problem, that is, a problem that there is a risk of unauthorized access by a malicious third party in a state where wireless communication can be made with the outside in any place.

A software update device according to one aspect of the present invention is defined in claim 1.

A software update method for an electronic device according to another aspect of the present invention is defined in claim 6.

As the present invention has the configuration described above, the present invention is able to effectively prevent an unauthorized access by a malicious third party.

### BRIEF DESCRIPTION OF DRAWINGS

Fig.1 is a configuration diagram of a software update system according to a first exemplary embodiment of the present invention.
Fig. 2 is a sequence chart of software update according to the first exemplary embodiment of the present invention.
Fig. 3 schematically illustrates an OTA system according to a second exemplary embodiment of the present invention.
Fig. 4 illustrates an update life cycle of vehicle software according to the second exemplary embodiment of the present invention.
Fig. 5 illustrates exemplary configurations of an OTA client and an OTA server according to the second exemplary embodiment of the present invention.
Fig. 6 illustrates details of an on-vehicle module according to the second exemplary embodiment of the present invention.
Fig. 7 illustrates an exemplary table containing rules according to the second exemplary embodiment of the present invention.
Fig. 8 illustrates state transition of the OTA system according to the second exemplary embodiment of the present invention.
Fig. 9 illustrates a procedure of applying a wake-up ID (WuRx-ID) to the OTA system according to the second exemplary embodiment of the present invention.
Fig. 10 illustrates a procedure of transmission and reception of a wake-up ID (WuRx-ID) in the OTA system according to the second exemplary embodiment of the present invention.
Fig. 11 illustrates a procedure of development and registration of the OTA system according to the second exemplary embodiment of the present invention.
Fig. 12 illustrates a procedure of specifying a trusted zone and using software update in the second exemplary embodiment of the present invention.
Fig. 13 illustrates a procedure of registering a new wake-up ID of a new vehicle by the OEM in the second exemplary embodiment of the present invention.
Fig. 14 illustrates an operation in a trusted zone of the OTA system according to the second exemplary embodiment of the present invention.
Fig. 15 illustrates a process of transmitting a wake-up sequence or "shoulder-tap" in the second exemplary embodiment of the present invention.
Fig. 16 illustrates a process of selecting wake-up or "shoulder-tap" in the second exemplary embodiment of the present invention.
Fig. 17 is a flowchart of OTA communication via a cellular network and OTA communication via WLAN in the second exemplary embodiment of the present invention.
Fig.18 is a configuration diagram of a software update system according to a third exemplary embodiment of the present invention.

### EXEMPLARY EMBODIMENTS

Next, exemplary embodiments of the present invention will be described in detail with reference to the drawings.

### [First Exemplary Embodiment]

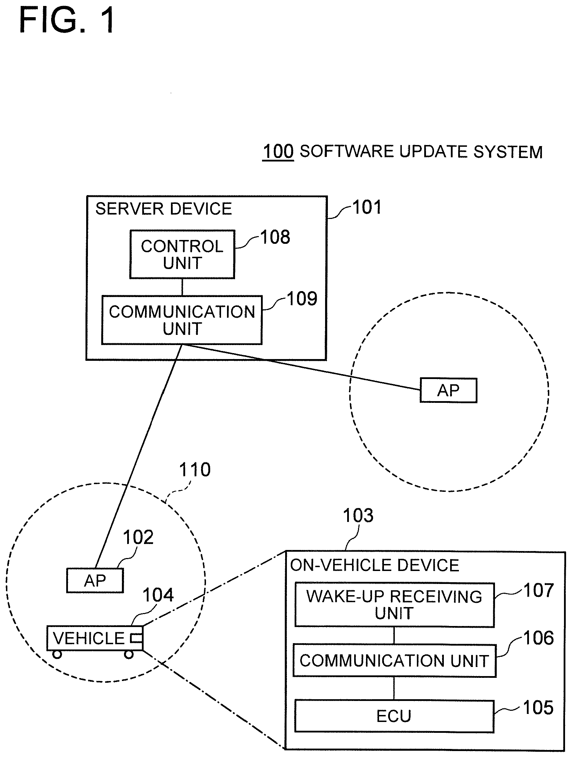

Referring to Fig. 1, a software update system 100 according to a first exemplary embodiment of the present invention includes a server device 101, a wireless access point 102, and an on-vehicle device 103.

The on-vehicle device 103 is mounted on a vehicle 104. Fig. 1 illustrates one vehicle 104 on which the on-vehicle device 103 is mounted. Generally, there are a plurality of vehicles on each of which an on-vehicle device similar to the on-vehicle device 103 is mounted. The on-vehicle device 103 includes an ECU 105, a communication unit 106, and a wake-up receiving unit 107. The ECU 105 executes software to thereby control the engine, transmission, brake, and the like of the vehicle 104. The communication unit 106 performs wireless communication with the server device 101 to update the software of the ECU 105. The communication unit 106 is generally in a sleep state for security and power saving. The wake-up receiving unit 107 is a receiver that wakes the communication unit 106 and the ECU 105 up. In the wake-up receiving unit 107, security information is stored. The security information may be a predefined wake-up ID, for example. The security information may be information related to the predefined time. The security information may be information related to a predefined person. The security information may be information related to a device that executes software update. These kinds of security information may be shared by a plurality of vehicles 104 or on-vehicle devices 103, or may be dedicated to each vehicle 104 or each on-vehicle device 103.

The server device 101 is an information processing device that updates software of the on-vehicle device 103 by wireless communication. The server device 101 includes a control unit 108 and a communication unit 109. The control unit 108 stores security information similar to that stored in the on-vehicle device 103. The control unit 108 also stores information of a wireless access point 102 (for example, MAC address and IP address) used for updating the software of the on-vehicle device 103. The information of the wireless access point 102 may be stored in the control unit 108 in association with an identifier of the on-vehicle device 103 or the vehicle 104. The communication unit 109 is a wireless communication unit for performing wireless communication with the wake-up receiving unit 107 and the communication unit 106 of the on-vehicle device 103 by the control unit 108 via the wireless access point 102.

The wireless access point 102 is a wireless device that connects the server device 101 and the on-vehicle device 103 with each other over the wireless communication network. The wireless access point 102 is installed at a predetermined location. User's home, a car dealer shop, a repair shop, and the like are examples of the locations where the wireless access point 102 is installed. A wireless coverage area 110 of the wireless access point 102 limits the physical area in which software update is performed by wireless communication. The wireless coverage area 110 is also called as a trusted zone.

Next, an operation of updating the software of the ECU 105 of the on-vehicle device 103 by the server device 101 via wireless communication will be described.

In the case of updating the software of the ECU 105, the user of the vehicle 104 on which the on-vehicle device 103 is mounted moves the vehicle 104 to a predetermined location. The predetermined location is user's home, a car dealer shop, a repair shop, or the like, as described above. In such a predetermined location, the wireless access point 102, registered in advance, is installed.

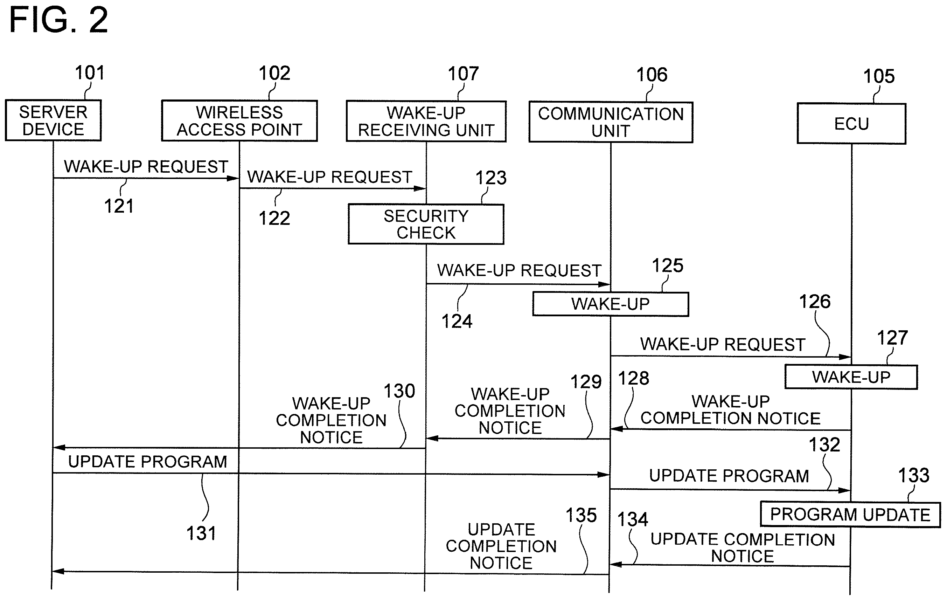

As illustrated in Fig. 1, when the vehicle 104 on which the on-vehicle device 103 is mounted is present within the wireless coverage area 110 of the wireless access point 102, software update by the wireless communication is performed under the initiative of the server device 101. Fig. 2 is a sequence chart of software update according to the present embodiment.

When the vehicle 104 on which the on-vehicle device 103 is mounted is at a predetermined location, the control unit 108 of the server device 101 transmits a wake-up request 121 to the wireless access point 102 installed at that location, via the communication unit 109. For example, when the vehicle 104 is at user's home, the control unit 108 transmits the wake-up request 121 to the wireless access point 102 registered in advance in association with the user's home. When the vehicle 104 is at a car dealer shop, the control unit 108 transmits the wake-up request 121 to the wireless access point 102 registered in advance in association with the shop. The server device 101 may allow the wake-up request 121 to be transmitted to include security information. For example, the server device 101 may allow the wake-up request 121 to include a security ID that is identical to the security ID set to the vehicle 104 on which the target on-vehicle device 103 is mounted. Meanwhile, when a temporal condition for performing software update is defined in advance, the server device 101 transmits the wake-up request 121 so as to satisfy the defined temporal condition. When a personal condition for performing software update is defined in advance, the server device 101 allows the wake-up request 121 to include personal information showing the personal condition for performing software update. When a device condition for performing software update is defined in advance, the server device 101 allows the wake-up request 121 to include device information of a device that is a target of software update. The wireless access point 102 transmits the wake-up request 121, received from the server device 101, to the wireless coverage area 110 as a wake-up request 122.

When the wake-up receiving unit 107 of the on-vehicle device 103 mounted on the vehicle 104 that is present in the wireless coverage area 110 receives the wake-up request 122, it performs security check 123. In the security check 123, the wake-up ID included in the received wake-up request 122 is compared with the wake-up ID stored in advance in the wake-up receiving unit 107. When the received wake-up ID does not match the stored wake-up ID, the wake-up receiving unit 107 disregards the wake-up request. When the received wake-up ID matches the stored wake-up ID, if there is no other security check previously defined as essential, the wake-up receiving unit 107 accepts the wake-up request.

When the security check for the temporal condition is essential, the wake-up receiving unit 107 checks whether or not the time of receiving the wake-up request 122 satisfies the predefined temporal condition. When the security check for the personal condition is essential, the wake-up receiving unit 107 checks whether or not the personal information included in the wake-up request 122 satisfies the predefined personal condition. When the security check for the device condition is essential, the wake-up receiving unit 107 checks whether or not the device information included in the wake-up request 122 satisfies the predefined device condition. The wake-up receiving unit 107 disregards the wake-up request 122 that does not satisfy the temporal condition, the personal condition, or the device condition. The wake-up receiving unit 107 accepts the wake-up request 122 when it satisfies the temporal condition, the personal condition, or the device condition, if there is no other problem.

When accepting the wake-up request 122, the wake-up receiving unit 107 transmits a wake-up request 124 to the communication unit 106. When the communication unit 106 receives the wake-up request 124 in a sleep state, the communication unit 106 transitions to a wake-up state (125). The communication unit 106 in the wake-up state transmits a wake-up request 126 to the ECU 105. When the ECU 105 receives the wake-up request 126 in a sleep state, the ECU 105 transitions to a wake-up state (127). The ECU 105 in the wake-up state transmits a wake-up completion notice 128 to the communication unit 106. Upon receipt of the wake-up completion notice 128, the communication unit 106 transmits a wake-up completion notice 129 to the wake-up receiving unit 107. Upon receipt of the wake-up completion notice 129, the wake-up receiving unit 107 transmits a wake-up completion notice 130 that is a reply to the wake-up request 121, to the server device 101 via the wireless access point 102. When the control unit 108 of the server device 101 receives the wake-up completion notice 130 via the communication unit 109, the control unit 108 recognizes that the on-vehicle device 103 having the desired wake-up ID is in a wake-up state at a desired location.

Then, the control unit 108 of the server device 101 transmits, by the communication unit 109, an update program 131 to the communication unit 106 of the on-vehicle device 103 via the wireless access point 102 at the location where the vehicle 104 is present. When the communication unit 106 receives the update program 131, the communication unit 106 transfers it as an update program 132 to the ECU 105. The ECU 105 receives the update program 132, and updates the currently used program by the received update program 132 (133). Then, the ECU 105 transmits an update completion notice 134 to the communication unit 106. When the communication unit 106 receives the update completion notice 134, the communication unit 106 transmits an update completion notice 135 to the server device 101 via the wireless access point 102.

When the control unit 108 of the server device 101 receives the update completion notice 135 via the communication unit 109, it recognizes that software update of the on-vehicle device 103 is completed.

As described above, according to the present embodiment, it is possible to effectively prevent unauthorized access to the on-vehicle device 103 by a malicious third party.

This is because in order to update the software of the on-vehicle device 103, it is necessary to cause the communication unit 106 to be in a wake-up state. In order to cause the communication unit 106 to be in a wake-up state, the vehicle 104 on which the on-vehicle device 103 is mounted must be present in the coverage area of the wireless access point determined in advance.

Further, in the present embodiment, since security check using the wake-up ID is performed, it is possible to effectively prevent an unauthorized access by a malicious third party who does not know the effective wake-up ID.

Furthermore, in the present embodiment, since security check using a temporal condition is performed, it is possible to prevent an unauthorized access performed in a time period not satisfying the predefined temporal condition.

Furthermore, in the present embodiment, since security check using a personal condition is performed, it is possible to prevent an unauthorized access by a person other than the predefined person.

Furthermore, in the present embodiment, since security check using a device condition is performed, it is possible to prevent an unauthorized access to a device other than the predefined device.

### [Second Exemplary Embodiment]

Next, a second exemplary embodiment of the present invention will be described.

### <Features of the present embodiment>

The present embodiment enables safe wireless software update for a vehicle by using a wireless wake-up receiver. A wake-up receiver limits the area in which Over The Air (OTA) communication can be performed. As a result, OTA communication in an unnecessary region such as a highway is limited. Further, it is possible to perform OTA communication only in a trusted region (trusted zone) such as an automobile manufacturer, a garage, or home. This is effective for an OTA software update campaign that can be performed only by an authorized person in charge within the trusted zone. As a result, unauthorized accesses to automobiles and components thereof, gateways, and ECUs are restricted. Consequently, safe OTC software update for a vehicle is realized.

### <Problem to be solved by the present embodiment>

OTA realizes update of on-vehicle software by wireless communication. In order to reduce costs for recalls, OTA is very useful for cost reduction. Nowadays, a variety of software is installed in a vehicle. Consequently, OTA is used at a high level for realizing easy software update by automobile manufacturers. Moreover, it is possible to apply new functions such as new services and applications to a vehicle by the OTA.

In the current OTA communication, software update can be made anywhere. While OTA communication is performed wirelessly, wired software update is also possible. When OTA communication can be made anywhere, there is a possibility that an unauthorized person accesses the vehicle and installs malfunctioned software. The case of Jeep/Chrysler revealed that a wireless access from anywhere involves a security risk. Only a physically limited access such as a predefined location can ensure a safe access.

Furthermore, OTA communication requires a wake-up signal for waking a communication module up. When a communication module is in a sleep mode, an unauthorized access is impossible, and the communication module is safe. When a communication module is in a wake-up state, communication is started, and anyone can access the communication module. OTA via a cellular network requires SMS sequence for waking a communication module up. In the case of using WLAN, a wake-up sequence is not standardized. A so-called shoulder-tap is impossible, and OTA cannot be performed. The present embodiment provides a wake-up control sequence (wireless frame) for WLAN that enables OTA when WLAN is used.

### <Solving means by the present embodiment>

The present embodiment improves the security of OTA software update for a vehicle. Thereby, it is possible to create a safe zone that is called a trusted zone. The trusted zones are in the automobile manufacturer, the original equipment manufacturer (OEM), the garage, and home. OTA communication can be performed in these predefined locations. Only authorized persons in charge in the trusted zones can access the communication module. OTA communication can be made only in the trusted zones. It is impossible to make an access to the communication module in other regions such as a highway. As a result, higher security is achieved.

In the present embodiment, a trusted zone is established by using a wake-up receiver. The wake-up receiver can receive a wake-up sequence. The wake-up receiver is a dedicated wireless device that receives only a predefined wake-up sequence. A predefined wake-up sequence includes a predefined wake-up ID. A predefined wake-up sequence may relate to MAC address of a wireless interface, frame length, and other modulation method (frame modulation (FML) and frequency shift keying (FSK)).

That is, a predefined wake-up sequence to be transmitted to a target wake-up receiver is required. When a wake-up sequence is received, a wake-up receiver can trigger the other internal state from off state to on state. For example, a wake-up receiver can wake the OTA data communication module (DCM) and ECU up. This is necessary for initiating OTA communication. The communication module that has woken up can initiate communication. The wake-up receiver enables OTA communication on the wireless area network (WLAN). The wake-up receiver operates after the entire wireless device is turned on, for example, at a frequency band that is the same as one in which the entire communication is performed.

When the WLAN is used for update of the OTA software, a higher bandwidth can be used. In the case of using the WLAN, a large-scale software package can be transmitted by the OTA. In addition, the WLAN is installed at home, in the garage, and the OEM. The WLAN is widely used and accepted. New WLAN standard may enable standardized wake-up signals such as IEEE 802.11ba. IEEE 802.11ba that is a new WLAN standard is useful for creating access points and modules of the WLAN in which wake-up signals can be used for OTA communication. However, it is also useful in radio frequencies and wireless protocols different from those described above. Those frequencies include, but not limited to, 920 MHz, sub 1GHz, 2.4 GHz, 5 GHz, 6GHz, and 60GHz.

Further, in the present embodiment, an identifier for protecting an access between the application, the server, and the OTA client is used. A so-called wake-up ID (WuRx ID) is a unique identifier of the OTA system. A correct wake-up ID is stored in the vehicle and the OTA client.

Hereinafter, configuration and operation of the present embodiment will be described in detail with reference to the drawings.

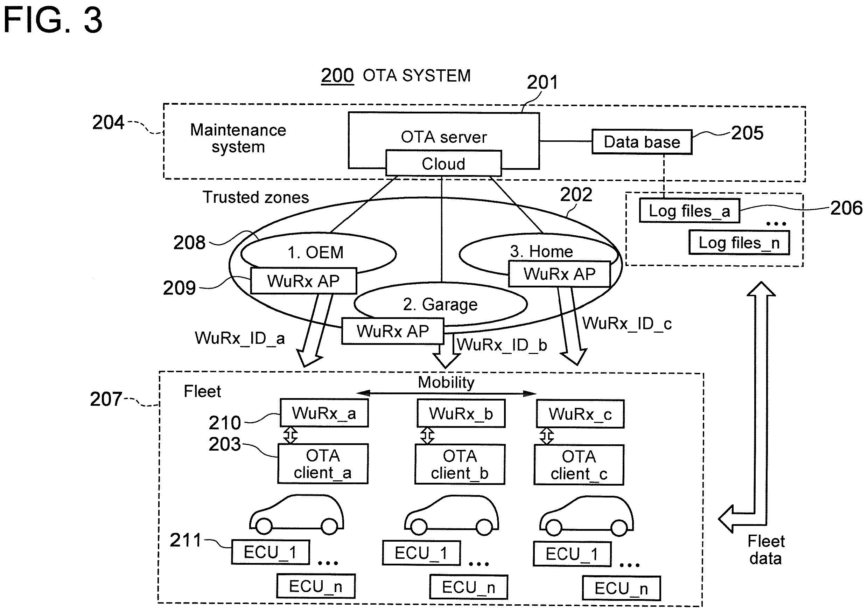

Fig. 3 schematically illustrates an OTA system according to the present embodiment. Referring to Fig. 3, an OTA system 200 includes an OTA server 201, a wireless network 202, and an OTA client 203. The OTA server 201 is connected with the OTA client 203 via a cloud or the wireless network 202 like the Internet. The OTA server 201 is connected with a main application (not illustrated) including the status of the vehicle, the wake-up ID (WuRx-ID), and other types of access information.

The OTA server 201 stores upgrade software. A reference numeral 204 in Fig. 3 denotes a maintenance system incorporating an access to the OTA server 201 and a database 205. Further, in order to store information related to software status of each vehicle, a log file 206 is connected with a vehicle fleet 207.

The OTA server 201 is connected to a hierarchical level of a trusted zone via cloud. Each trusted zone 208 is provided with a wireless access point 209. The wireless access point 209 can transmit a wake-up sequence within the trusted zone 208. The wireless access point 209 is provided with an extended wake-up function for transmitting a wake-up signal. Preferably, a wake-up sequence is also based on IEEE 802.1 1ba that is a future WLAN protocol. A wake-up signal includes a wake-up ID.

A wake-up sequence is received by a wake-up receiver 210 in the vehicle. The wake-up receiver 210 is connected with the OTA client 203. On the vehicle, at least one ECU 211 is mounted. When the wake-up receiver 210 receives a wake-up sequence, it wakes the OTA client 203 up. After the wake-up, the OTA client 203 begins downloading of software from the OTA server 201 to update the software of the ECU 211.

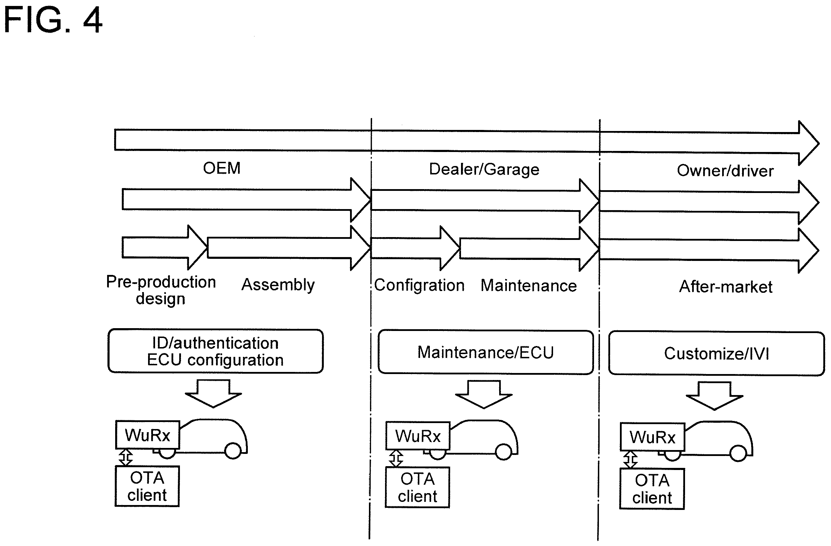

Fig. 4 illustrates a lifecycle of vehicle software update. At each level of OEM, a dealer/garage, and an owner/driver, the OTA communication proposed in the present embodiment makes software upgrade easier. Safe OTA communication is performed at a limited location, that is, OEM, a dealer, or home, for example. These locations are safe, and OTA communication can be established therein. Further, OTA client/server application is started only when a wake-up sequence is received at those locations.

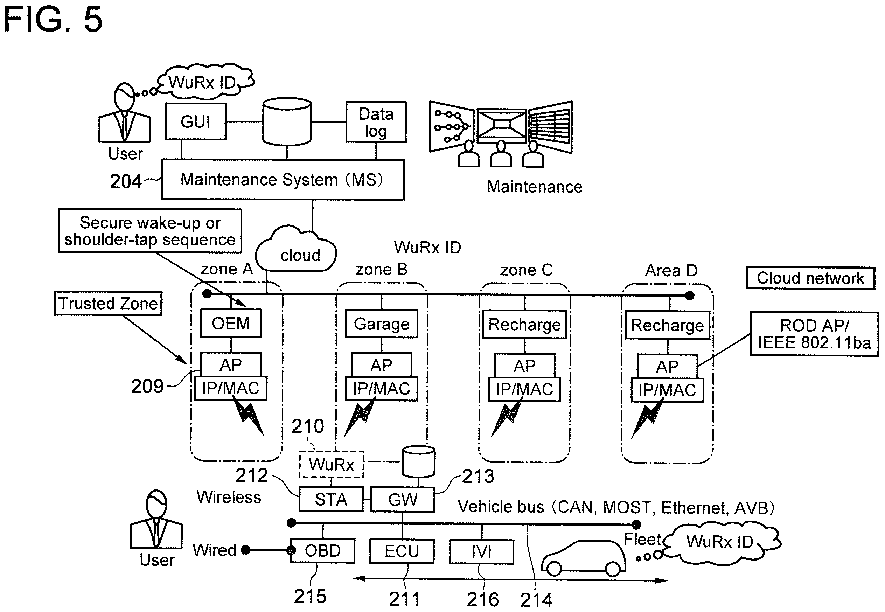

Fig. 5 illustrates an exemplary configuration of an OTA client and an OTA server. Fig. 5 also illustrates trusted zones including an OEM, a garage, a battery charging station, and home. Referring to Fig. 5, the wake-up receiver 210 is connected with a WLAN station (STA) 212 inside the vehicle. The WLAN station 212 is connected with a vehicle bus 214 via a gateway (GW) 213. The vehicle bus 214 is configured of Controller Access Network (CAN), Media Oriented Systems Transport (MOST), Ethernet (registered trademark), or Audio-Video Bridging (AVB). The vehicle bus 214 is connected with an onboard diagnosis interface (ODB) 215, the ECU 211, and an inter-vehicle infotainment unit (IVI).

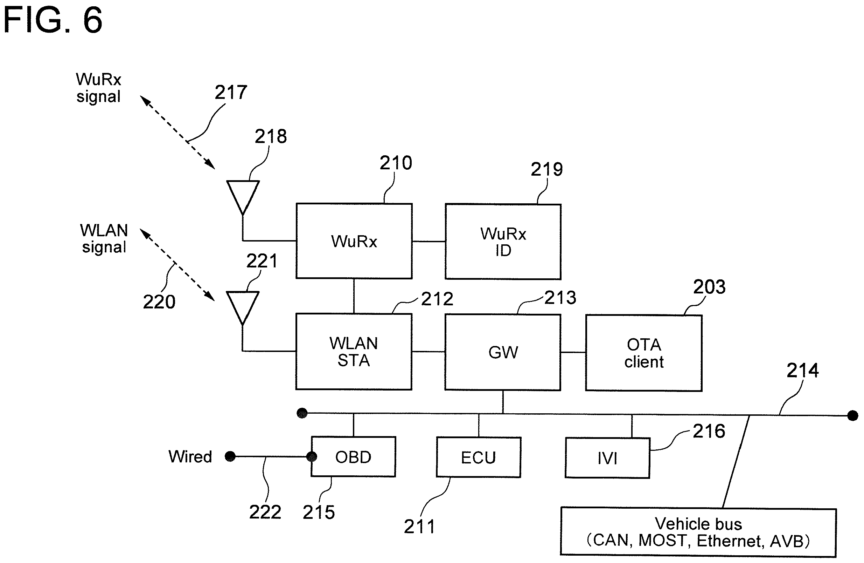

Fig. 6 illustrates the details of on-board modules. The wake-up signal 217 is received by the wake-up receiver 210 via an antenna 218. The wake-up signal 217 includes a wake-up ID. Then, the received wake-up signal 217 and the wake-up ID included therein are collated with the wake-up ID set to the vehicle in advance by a wake-up ID collation unit 219, and it is identified whether or not the both IDs match. When the wake-up ID included in the wake-up signal 217 is valid, the WLAN station 212 is activated. When the WLAN station 212 is activated, WLAN communication is initiated, and a WLAN signal 220 is received via an antenna 221.

The gateway 213 transfers WLAN data to the OTA client 203. Then, the OTA client 203 begins communication with the OTA server 201. The OTA client 203 transfers new software, received from the OTA server 201, to the ECU 211, the IVI 216, or another on-vehicle unit, via the vehicle bus 214. Instead, it is possible to transfer an additional software component to the ECU 211 or IVI 216 via the OBD 215 connected with a wired communication channel.

A maintenance system 204 has a table in which rules are stored. Rules define which person can access which zone. That is, a set of rules useful for defining a trusted zone has been defined. The rule set is defined by a manager. The manager defines a location where communication is allowed. The rule set is a combination of location, person, and schedule. It is necessary to limit access right to the vehicle hardware during the software update campaign.

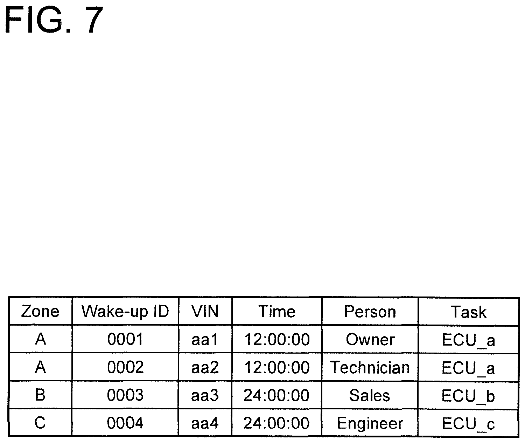

Fig. 7 illustrates an exemplary table in which rules are stored. A rule is configured of items including zone, wake-up ID, vehicle identification number (VIN), time, person, and task. Zone in the rule specifies the zone to which the rule is applied. Wake-up ID in the rule identifies a correct wake-up OTA system. Vehicle identification number is used for identifies a target vehicle. Time defines the temporal condition for executing a tank. Person defines a personal condition of a person who can execute the task. Task shows software upgrade of the target ECU. Task shows a device condition. The rule set may include transmission and reception of a wireless wake-up signal.

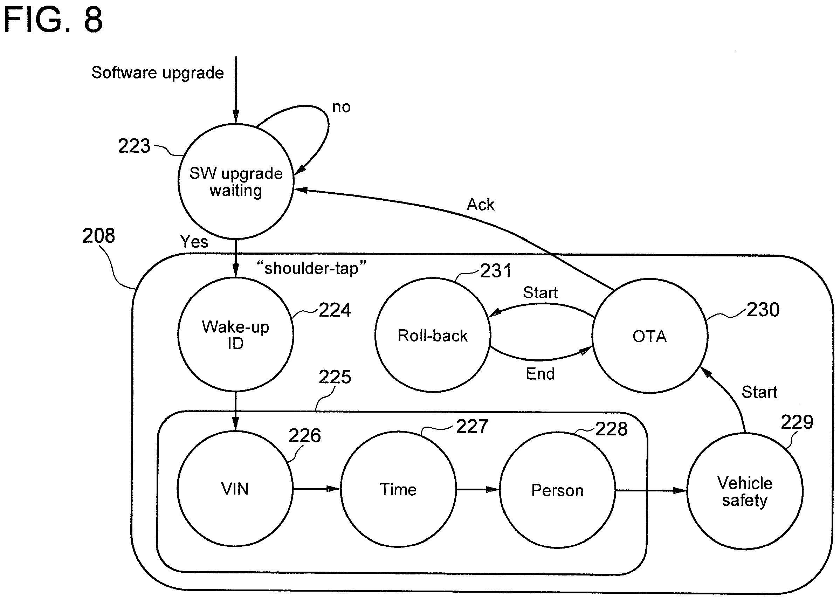

Fig. 8 illustrates state transition of the OTA system according to the present embodiment. The OTA system begins with a waiting state 223 of software upgrade. When there is no pending software upgrade, the OTA system has nothing to do, so that it remains in the waiting state 223. When there is pending software upgrade, the OTA system issues a wake-up sequence (state 224). The wake-up sequence is used as a "shoulder-tap" for activating a wireless unit. The wake-up sequence can be used only in the trusted zone 208.

In the trusted zone 208, the OTA system performs predetermined evaluation 225. That is, in the OTA system, a wake-up sequence related to a vehicle identification number (VIN) 226 of the vehicle that is a software update target, time 227, and a person 228 is identified, and it is determined whether or not they conform to the rule. When they conform to the rule, the OTA system establishes OTA communication only when the vehicle must be detected as save (step 229). Also, the OTA system begins upgrade of the software only when it is identified that the vehicle is safe. The OTA system determines that it is safe when the vehicle is not moving and the access right is given to a proper person. When the safety of the vehicle is established, the OTA system begins OTA communication (state 230).

The OTA system uses OTA communication to download software upgrade from the OTA server 201. When installing of software upgrade failed, the OTA system installs previous stable software by a roll-back function 231. The roll-back function 231 ensures correct operation of the vehicle. When software upgrade failed, the OTA server 201 is notified of it via the OTA client 203. Meanwhile, when software upgrade succeeded, the OTA server 201 is notified of it via the OTA client 203.

Operation of the OTA system will be described below in detail with use of a flowchart.

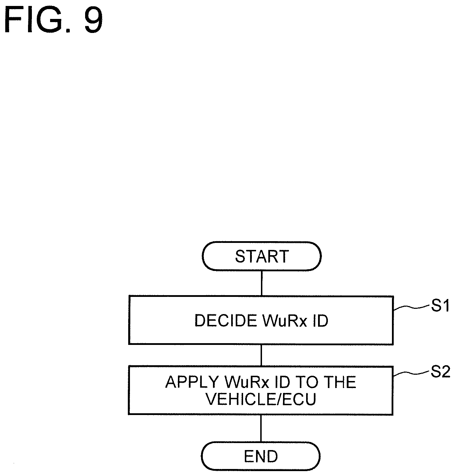

Fig. 9 illustrates a procedure of applying a wake-up ID (WuRx-ID) to the OTA system. First, a wake-up ID is decided by the manager of the OTA server 201, for example (S1). Next, the wake-up ID is applied to a target vehicle (S2).

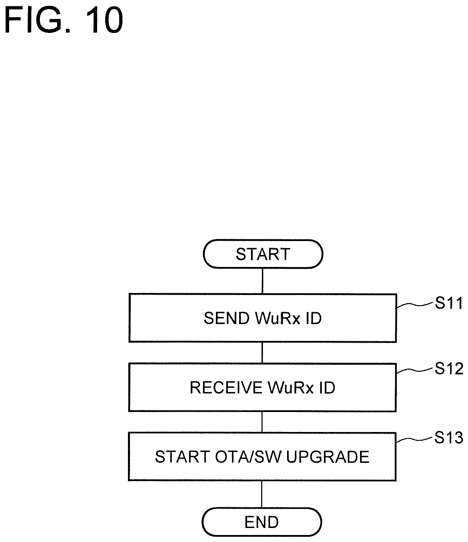

Fig. 10 illustrates a procedure of transmission and reception of a wake-up ID (WuRx-ID) in the OTA system. First, a wake-up ID is transmitted from the access point 209 of a wireless local area network (WLAN) (S11). Next, the wake-up ID is received by a wake-up receiver in the vehicle (S12). When reception of the wake-up ID succeeded, upgrade of the OTA software is started (S13).

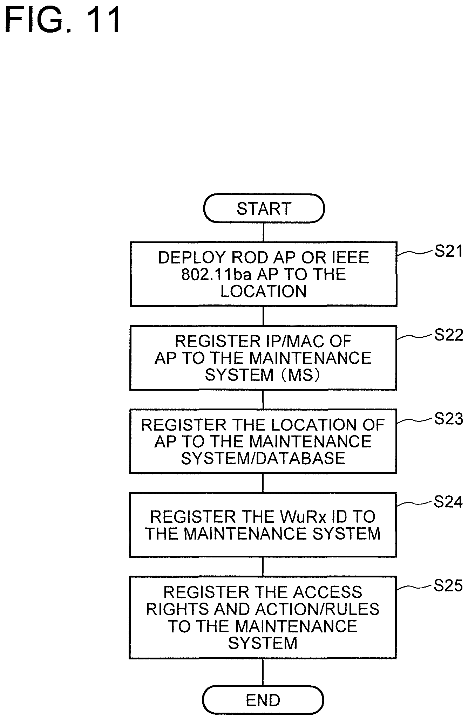

Fig. 11 illustrates a procedure of development and registration of the OTA system. First, a wireless access point (AP) of Radio On Demand Networks (ROD) or a wireless access point (AP) of IEEE 802.11ba standard is deployed (S21). Then, the IP address and the MAC address of the wireless access point is registered in the maintenance system 204 (S22). Then, the position of the wireless access point is registered in the maintenance system 204 (S23). Then, wake-up ID is registered in the maintenance system 204 (S24). Then, access right and action/rule are registered in the maintenance system 204 (S25).

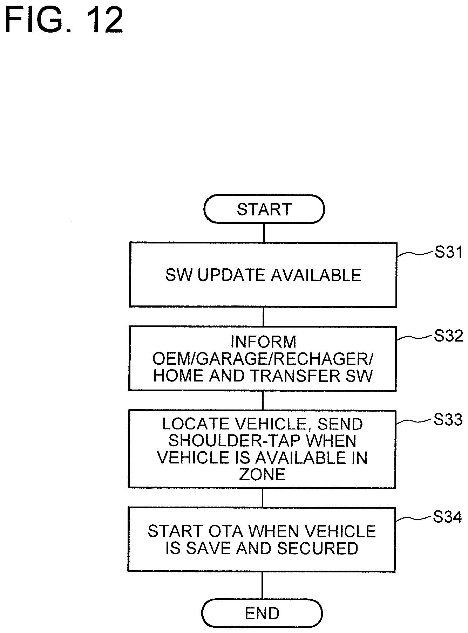

Fig. 12 illustrates a procedure of specifying a trusted zone and using software update. First, the OTA system allows software update to be available (S31). Then, the OTA system informs the position of the target vehicle such as the OEM, a garage, a battery charger station, or home, and transfers software in advance such that the software is available at a scheduled time (S32). Then, the vehicle reaches a trusted zone, and a wake-up sequence including the wake-up ID (WuRx-ID) is received (S33). Then, after the wake-up sequence is normally received, when the vehicle is at a safe position (engine does not work, for example), software upgrade is started (S34).

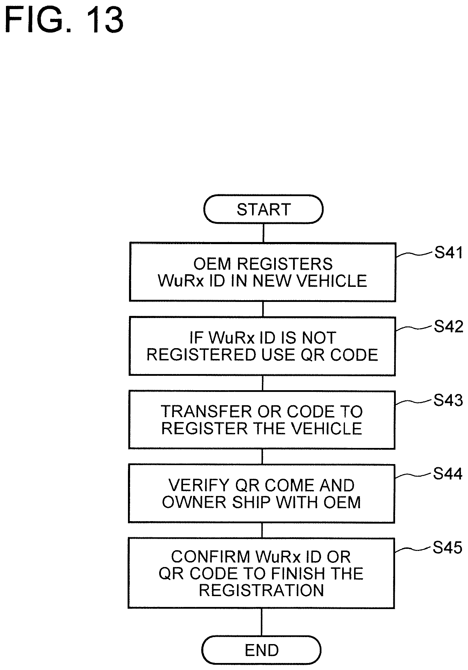

Fig. 13 illustrates a procedure of registering a new wake-up ID of the vehicle by the OEM. First, the OEM registers a wake-up ID in a new vehicle (S41). When a wake-up ID is not registered, the OEM uses a QR code (S42). Each vehicle is provided with a QR code (vehicle door entry) similar to the vehicle identification number (VIN). The QR code is used for registration of the vehicle. Then, in order to register the vehicle, the QR code is transferred (S43). Then, it is verified whether or not the QR code and the ownership of the vehicle are correct, by the maintenance system (S44). After verification of the wake-up ID and the QR code, the registration process is completed (S45).

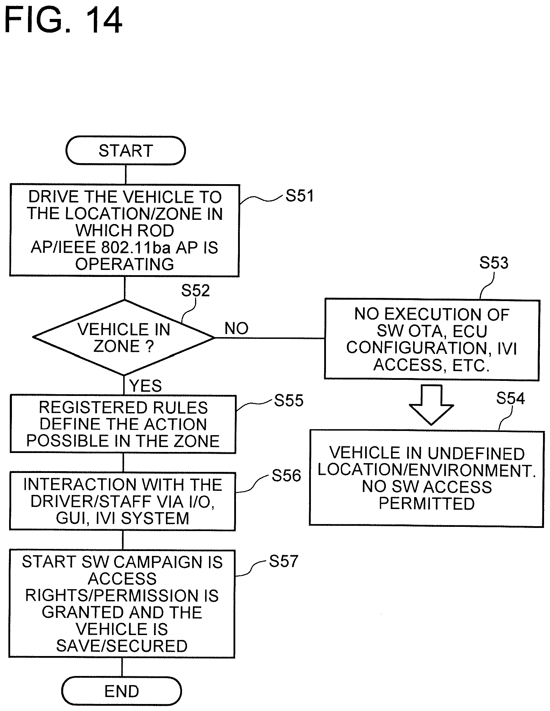

Fig. 14 illustrates operation of the OTA system in a trusted zone. First, the vehicle is moved to a trusted zone where a predetermined wireless access point is operating (S51). In the trusted zone, a ROD wireless access point or a wireless access point of IEEE 802.11ba is operating. When no zone is found, that is, when the vehicle is out of a trusted zone (NO at S52), update of OTA and ECU software is not executable (S53). Also, when the vehicle is not in a trusted zone, an access to software upgrade is not permitted (S54).

When the vehicle is in a trusted zone (YES at S52), a rule defining the action enabled in the zone is verified (S55). A rule includes schedule access time, vehicle identification number (VIN), person, and task. Next, in order to confirm software update and to start software update process via the vehicle IVI system, for example, some interaction with the driver or maintenance staff may exist via the automobile IVI system (S56). Software upgrade can be performed only when the vehicle is in a save state, that is, the vehicle is not driven, the engine is not working, or the like (S57).

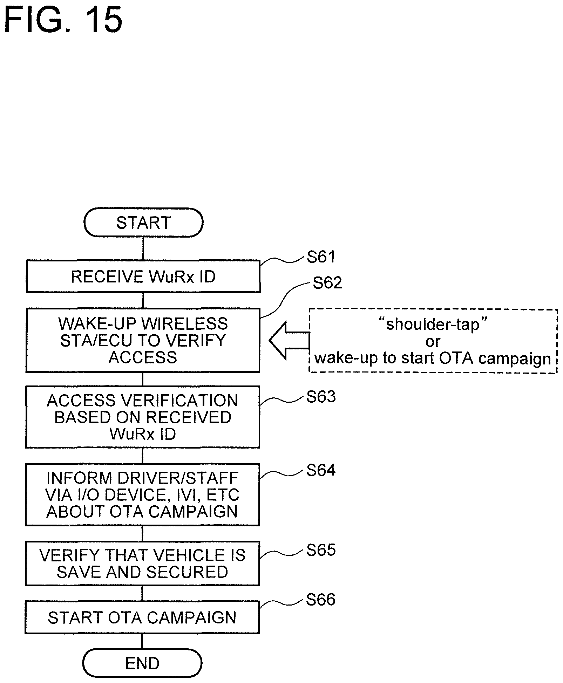

Fig. 15 illustrates a process of transmitting a wake-up sequence or "shoulder-tap". First, a wake-up ID (WuRx-ID) is received by the vehicle (S61). Then, in order to verify an access, the station/ECU is woken up wirelessly (S62). Then, on the basis of the received wake-up ID, an access is verified (S63). Then, pending OTA software update is informed to the driver or maintenance staff (S64). Then, safety of the vehicle is identified (S65). When the vehicle is at a safe position, OTA software upgrade campaign is started (S66).

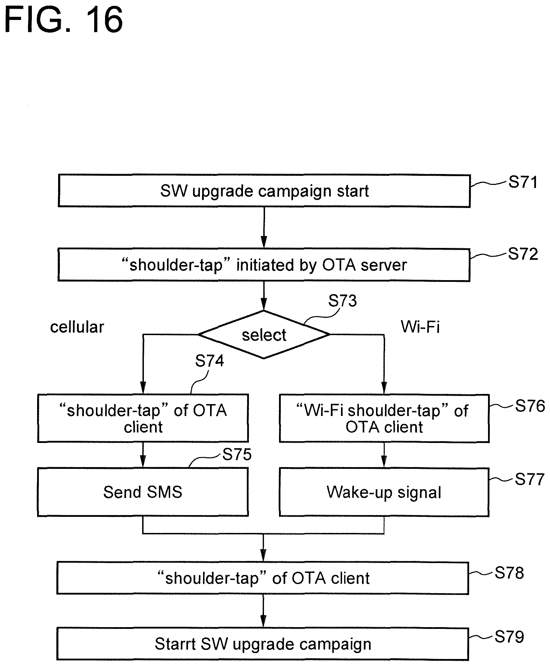

Fig. 16 illustrates a process of selecting wake-up or shoulder-tap. First, software upgrade is pending (S71). Then, shoulder-tap is initiated by the OTA server (S72). Then, the OTA server checks whether the wireless access system is a cellular network or Wi-Fi (WLAN) (S73). In the case of a cellular network, the OTA server transmits a short message service (SMS) message to start a shoulder-tap signal for activating the OTA client (S74), and transmits SMS (S75). In the case of Wi-Fi (WLAN), the OTA server starts "Wi-Fi shoulder-tap" in the form of wake-up sequence (76), and transmits a wake-up signal (S77). The wake-up ID signal and the wake-up ID (WuRx-ID) are used for activating the OTA client only when WLAN (Wi-Fi) communication is available. Next, when the OTA client receives a wake-up sequence (S78), OTA software upgrade campaign is started (S79).

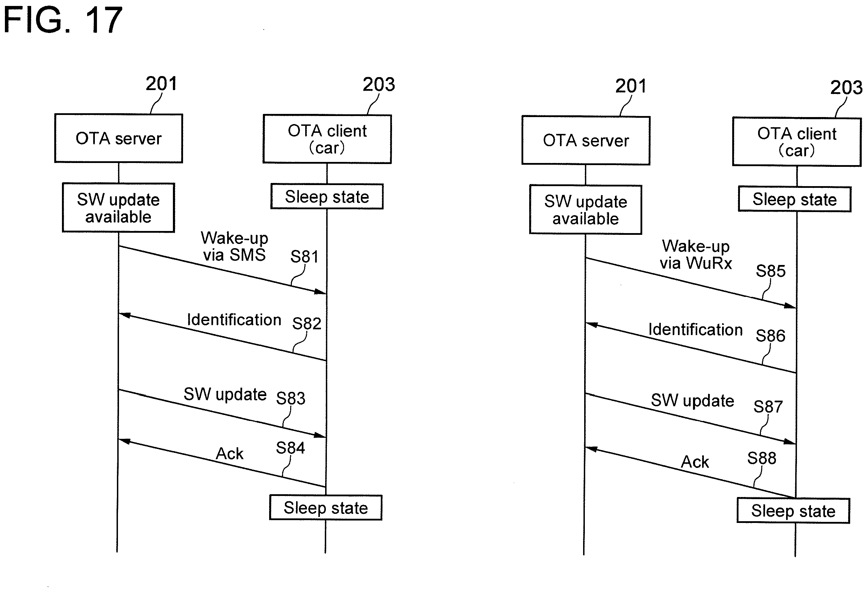

Fig. 17 is a flowchart of OTA communication via a cellular network and OTA communication via WLAN. In the initial state, software update is available in the OTA server 201, and the OTA client 203 is in a sleep state.

When there is an available cellular access, a wake-up sequence as an SMS message is transmitted from the OTA server 201 to the OTA client 203 (S81). A wake-up message is transmitted to wake the OTA client 203 up from a sleep state. When the OTA client 203 woke up and is an active state, it is informed to the OTA server 201 (S82). When the OTA client 203 becomes usable, the OTA server 201 begins software upgrade (S83). When the software upgrade is completed, the fact is informed from the OTA client 203 to the OTA server 201 (S84). Also, when the software upgrade is completed, the OTA client returns to the sleep state.

When the WLAN access is available, a wake-up message is transmitted via a wireless access point of WLAN (S85). The fact that the OTA client 203 woke up and is in an active state is informed to the OTA server 201 (S86). When the OTA client 203 is active, the OTA server 201 begins software upgrade (S87). When the software upgrade is completed, the fact is informed from the OTA client 203 to the OTA server 201 (S88). When the OTA software upgrade is completed, the OTA client returns to the sleep state.

### <Modification of Second Exemplary Embodiment>

The second exemplary embodiment enables safe transmission of vehicle software update. In particular, the WLAN protocol of IEEE 802.1 1ba enables standardized wake-up signal. A modification of the second exemplary embodiment is a use of wireless personal area network (WPAN) like IEEE 802.15.4. Such a WPAN protocol is used and implemented in a sensor node. Application of the present invention to IEEE 802.15.4 WPAN sensor enables OTA to the Internet of Things (IoT). Other WLAN protocols to which the present invention is applicable include IEEE 802.11b/1/n/ac/ah/ai/ax, WiSUN, LoRA, and Sigfoxx. WiSUN device includes IEEE 802.15.4e/g protocol standard.

Further, the second exemplary embodiment may provide data upload application. After the wake-up of the OTA client in the vehicle, vehicle data can be transferred to the OTA server. Vehicle data may include telematic data, position data, and sensor data. Such data is useful for various applications including vehicle maintenance service.

Furthermore, the second exemplary embodiment may include a service platform utilizing transmission and reception of a wake-up sequence, and a rule set to create trusted zones for storing safe software upgrade of the vehicle. A service platform is configured of a service program for setting rules for accessing the vehicle to perform OTA communication by the manager. This service includes storing a series of rules, a wake-up ID, and the details of the vehicle. The details include vehicle information such as manufacture ID, the year of manufacture, ECU status, ECU software status, time stamp, and error messages. This service enables the vehicle data to be stored in the database. The database is useful for software campaign and government request.

### <Field to which the present embodiment is applicable>

The present invention is applicable to on-vehicle, out of the vehicle, Over The Air (OTA), automotive, software, software update, client, server, solution (OTA and WuRx), wake-up, on-demand OTA, Radio On Demand Networks (ROD) in which power consumption and radio resources are minimized, Wake-up Receiver, on-demand access, and the like.

The present embodiment can enhance the security by being combined with Global Positioning System (GPS). The combination of GPS, OTA, and WuRx is advantageous. However, in some regions, full use of GPS may not be possible.

### <Third Exemplary Embodiment>

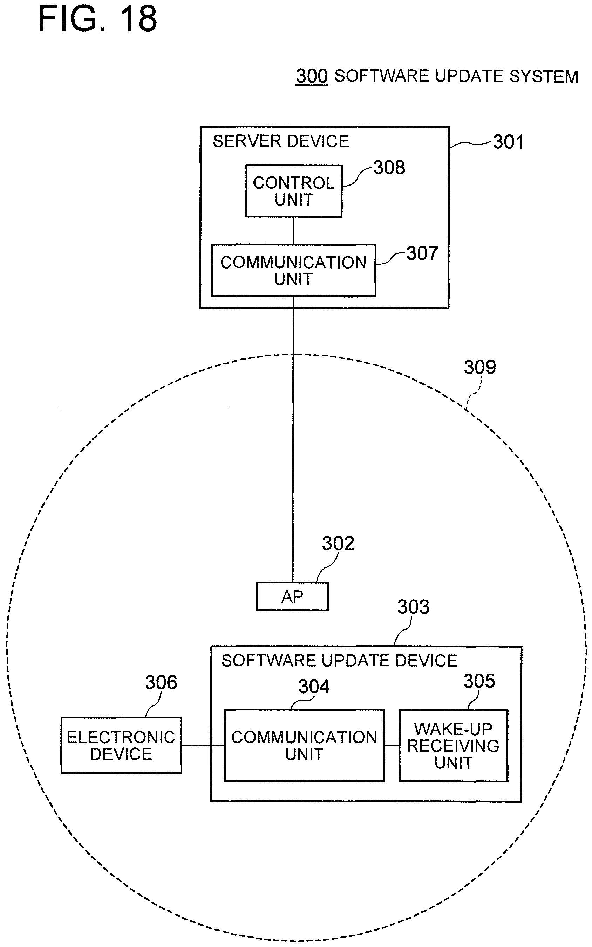

Referring to Fig. 18, a software update system 300 according to a third exemplary embodiment of the present invention includes a server device 301, a wireless access point 302, and a software update device 303.

The software update device 303 includes a communication unit 304 and a wake-up receiving unit 305. The communication unit 304 is connected with an electronic device 306 that executes software. When the wake-up receiving unit 305 receives a wake-up request from the wireless access point 302 registered in advance, the wake-up receiving unit 305 allows the communication unit 304 to transition from a sleep state to a wake-up state. When the communication unit 304 transitioned to the wake-up state, the communication unit 304 begins wireless communication with an external device, and updates software of the electronic device 306 by the update software received from the external device.

The server device 301 includes a communication unit 307 and a control unit 308. The communication unit 307 performs wireless communication with the software update device 303 that is present in a wireless coverage area 309 of the wireless access point 302, via the wireless access point 302. The control unit 308 transmits a wake-up request from the wireless access point 302 registered in advance, via the communication unit 307. Upon receipt of a response by wireless communication from the software update device 303 that received the wake-up request and transitioned from the sleep state to the wake-up state, the control unit 308 transmits update software for updating the software of the electronic device 306 from the wireless access point 302 to the software update device 303 via the communication unit 307.

The software update system 300 configured as described above functions as described below. That is, the control unit 308 of the server device 301 transmits a wake-up request from the wireless access point 309 registered in advance, via the communication unit 307. The wireless access point 309 that received the transmitted wake-up request transmits the received wakeup request to the wireless coverage area 309.

The wake-up receiving unit 305 of the software update device 303 can receive a wake-up request only when it is present in the wireless coverage area 309 of the wireless access point 309. When the wake-up receiving unit 305 receives a wake-up request from the wireless access point 302, the wake-up receiving unit 305 allows the communication unit 304 to transition from a sleep state to a wake-up state. When the communication unit 304 transitioned to a wake-up state, the communication unit 304 begins wireless communication with the server device 301.

When the control unit 308 of the server device 301 receives a response, by wireless communication, from the communication unit 304 that received the wake-up request and transitioned from a sleep state to a wake-up state, the control unit 308 transmits update software for updating the software of the electronic device 306 from the wireless access point 302 to the communication unit 304 by the communication unit 307. The communication unit 304 updates the software of the electronic device 306 by the update software received from the server device 301.

As described above, according to the present embodiment, it is possible to effectively prevent unauthorized access to the electronic device 306 by a malicious third party.

This is because it is necessary to allow the communication unit 304 to be in a wake-up state in order to update the software of the electronic device 306. In order to allow the communication unit 304 to be in a wake-up state, the wake-up receiving unit 305 must receive a wake-up request. In order to do so, the wake-up receiving unit 305 must be present in the wireless coverage area 309 of the predefined wireless access point 302.

While the present invention has been described with reference to the exemplary embodiments described above, the present invention is not limited to the above-described embodiments. The form and details of the present invention can be changed within the scope of the appended claims.

The present invention is based upon and claims the benefit of priority from Japanese patent application No. 2017-131130, filed on July 4, 2017.

### INDUSTRIAL APPLICABILITY

The present invention is applicable to a system of updating software of an electronic device by wireless communication, that is, a system of updating software of an on-vehicle electronic device from a server device via a wireless network, for example.

### REFERENCE SIGNS LIST

- 100: software update system
- 101: server device
- 102: wireless access point
- 103: on-vehicle device
- 104: vehicle
- 105: ECU
- 106: communication unit
- 107: wake-up receiving unit
- 108: control unit
- 109: communication unit
- 110: wireless coverage area
- 200: OTA system
- 201: OTA server
- 202: wireless network
- 203: OTA client
- 204: maintenance system
- 205: database
- 206: log file
- 207: vehicle fleet
- 208: trusted zone
- 209: wireless access point
- 210: wake-up receiver
- 211: ECU
- 212: WLAN station
- 213: gateway
- 214: vehicle bus
- 215: OBD
- 216: IVI
- 217: wake-up signal
- 218: antenna
- 219: wake-up ID collation unit
- 220: WLAN signal
- 221: antenna
- 222: communication channel
- 223: standby state
- 224: state
- 225: evaluation
- 226: VIN
- 227: time
- 228: person
- 229: state
- 230: state
- 231: roll-back state
- 300: software update system
- 301: server device
- 302: wireless access point
- 303: software update device
- 304: communication unit
- 305: wake-up receiver
- 306: electronic device
- 307: communication unit
- 308: control unit
- 309: wireless coverage area

## Claims

1. A software update device (303) comprising:
a communication unit (304) connected with an electronic device (306) that executes software;
a wake-up receiving unit (305) that, when receiving a wake-up request transmitted by a control unit (308) within a server device (301) from a wireless access point (302) registered in advance, allows the communication unit (304) to transition from a sleep state to a wake-up state, wherein
when the communication unit (304) transitioned to the wake-up state, the communication unit (304) initiates wireless communication with the control unit (308), receives update software transmitted by the control unit (308) from the wireless access point (302), and updates the software of the electronic device (306) by the update software received.

2. The software update device (303) according to claim 1, wherein
the wake-up receiving unit (305) is configured to check whether or not a predefined wake-up ID is included in the wake-up request, and when the predefined wake-up ID is not included, disregard the wake-up request.

3. The software update device (303) according to claim 1 or 2, wherein
the wake-up receiving unit (305) is configured to check whether or not a time when the wake-up request is received satisfies a predefined temporal condition, and when the time does not satisfy the predefined temporal condition, disregard the wake-up request.

4. The software update device (303) according to any of claims 1 to 3, wherein
the wake-up receiving unit (305) is configured to check whether or not personal information included in the wake-up request satisfies a predefined personal condition, and when the personal information does not satisfy the predefined personal condition, disregard the wake-up request.

5. The software update device (303) according to any of claims 1 to 4, wherein
the wake-up receiving unit (305) is configured to check whether or not information of the electronic device (306) included in the wake-up request satisfies a predefined device condition, and when the information of the electronic device (306) does not satisfy the predefined device condition, disregard the wake-up request.

6. A software update method for an electronic device (306) to be performed by a software update device (303) including a wake-up receiving unit (305) and a communication unit (304) connected with the electronic device (306) that executes software,
the method comprising
by the wake-up receiving unit (305), when receiving a wake-up request transmitted by a control unit (308) within a server device (301) from a wireless access point (302) registered in advance, allowing the communication unit (304) to transition from a sleep state to a wake-up state; and
when the communication unit (304) transitioned to the wake-up state, by the communication unit (304), initiating wireless communication with the control unit (308), receiving update software transmitted by the control unit (308) from the wireless access point (302), and updating the software of the electronic device (306) by the update software received.

7. The software update method for the electronic device (306) according to claim 6, further comprising
by the wake-up receiving unit (305), checking whether or not a predefined wake-up ID is included in the wake-up request, and when the predefined wake-up ID is not included, disregarding the wake-up request.

8. The software update method for the electronic device (306) according to claim 6 or 7, further comprising
by the wake-up receiving unit (305), checking whether or not a time when the wake-up request is received satisfies a predefined temporal condition, and when the time does not satisfy the predefined temporal condition, disregarding the wake-up request.

9. The software update method for the electronic device (306) according to any of claims 6 to 8, further comprising
by the wake-up receiving unit (305), checking whether or not personal information included in the wake-up request satisfies a predefined personal condition, and when the personal information does not satisfy the personal condition, disregarding the wake-up request.

10. The software update method for the electronic device (306) according to any of claims 6 to 9, further comprising
by the wake-up receiving unit (305), checking whether or not information of the electronic device (306) included in the wake-up request satisfies a predefined device condition, and when the information of the electronic device (306) does not satisfy the predefined device condition, disregarding the wake-up request.

11. A program for causing a computer to perform the method according to any of claims 6 to 10.

## Patentansprüche

1. Software-Aktualisierungsvorrichtung (303), mit:
einer Kommunikationseinheit (304), die mit einer elektronischen Vorrichtung (306) verbunden ist, die eine Software ausführt;
einer Weckrufempfangseinheit (305), die, wenn sie eine durch eine Steuereinheit (308) innerhalb eines Servers (301) übertragene Weckanforderung von einem im Voraus registrierten drahtlosen Zugangspunkt, Wireless Access Point, (302) empfängt, der Kommunikationseinheit (304) ermöglicht, von einem Ruhezustand in einen Aufwachzustand überzugehen, wobei
wenn die Kommunikationseinheit (304) in den Aufwachzustand übergegangen ist, die Kommunikationseinheit (304) eine Drahtloskommunikation mit der Steuereinheit (308) einleitet, durch die Steuereinheit (308) übertragene Aktualisierungssoftware vom drahtlosen Zugangspunkt (302) empfängt, und die Software der elektronischen Vorrichtung (306) durch die empfangene Aktualisierungssoftware aktualisiert.

2. Software-Aktualisierungsvorrichtung (303) nach Anspruch 1, wobei
die Weckrufempfangseinheit (305) dafür konfiguriert ist, zu prüfen, ob in der Weckanforderung eine vordefinierte Weck-ID enthalten ist oder nicht, und wenn die vordefinierte Weck-ID nicht enthalten ist, die Weckanforderung zu ignorieren.

3. Software-Aktualisierungsvorrichtung (303) nach Anspruch 1 oder 2, wobei
die Weckrufempfangseinheit (305) dafür konfiguriert ist, zu prüfen, ob eine Zeit, zu der die Weckanforderung empfangen wird, eine vordefinierte zeitliche Bedingung erfüllt oder nicht, und wenn die Zeit die vordefinierte zeitliche Bedingung nicht erfüllt, die Weckanforderung zu ignorieren.

4. Software-Aktualisierungsvorrichtung (303) nach einem der Ansprüche 1 bis 3, wobei
die Weckrufempfangseinheit (305) dafür konfiguriert ist, zu prüfen, ob in der Weckanforderung enthaltene persönliche Information eine vordefinierte persönliche Bedingung erfüllt oder nicht, und wenn die persönliche Information die vordefinierte persönliche Bedingung nicht erfüllt, die Weckanforderung zu ignorieren.

5. Software-Aktualisierungsvorrichtung (303) nach einem der Ansprüche 1 bis 4, wobei
die Weckrufempfangseinheit (305) dafür konfiguriert ist, zu prüfen, ob in der Weckanforderung enthaltene Information der elektronischen Vorrichtung (306) eine vordefinierte Vorrichtungsbedingung erfüllt oder nicht, und wenn die Information der elektronischen Vorrichtung (306) die vordefinierte Vorrichtungsbedingung nicht erfüllt, die Weckanforderung zu ignorieren.

6. Software-Aktualisierungsverfahren für eine elektronische Vorrichtung (306), das durch eine Software-Aktualisierungsvorrichtung (303) ausgeführt werden soll, die eine Weckrufempfangseinheit (305) und eine Kommunikationseinheit (304) aufweist, die mit der elektronischen Vorrichtung (306) verbunden ist, die eine Software ausführt,
wobei das Verfahren die Schritte aufweist,
durch die Weckrufempfangseinheit (305): wenn die Weckrufempfangseinheit (305) eine durch eine Steuereinheit (308) innerhalb eines Servers (301) übertragene Weckanforderung von einem im Voraus registrierten drahtlosen Zugangspunkt (302) empfängt, der Kommunikationseinheit (304) ermöglicht wird, von einem Schlafzustand in einen Aufwachzustand überzugehen; und
wenn die Kommunikationseinheit (304) in den Aufwachzustand übergegangen ist, durch die Kommunikationseinheit (304): Einleiten einer Drahtloskommunikation mit der Steuereinheit (308), Empfangen durch die Steuereinheit (308) übertragene Aktualisierungssoftware vom drahtlosen Zugangspunkt (302), und Aktualisieren der Software der elektronischen Vorrichtung (306) durch die empfangene Aktualisierungssoftware.

7. Software-Aktualisierungsverfahren für eine elektronische Vorrichtung (306) nach Anspruch 6, ferner mit:
Prüfen durch die Weckrufempfangseinheit (305), ob in der Weckanforderung eine vordefinierte Weck-ID enthalten ist oder nicht, und wenn die vordefinierte Weck-ID nicht enthalten ist, Ignorieren der Weckanforderung.

8. Software-Aktualisierungsverfahren für eine elektronische Vorrichtung (306) nach Anspruch 6 oder 7, ferner mit:
Prüfen durch die Weckrufempfangseinheit (305), ob eine Zeit, zu der die Weckanforderung empfangen wird, eine vordefinierte zeitliche Bedingung erfüllt oder nicht, und wenn die Zeit die vordefinierte zeitliche Bedingung nicht erfüllt, Ignorieren der Weckanforderung.

9. Software-Aktualisierungsverfahren für eine elektronische Vorrichtung (306) nach einem der Ansprüche 6 bis 8, ferner mit:
Prüfen durch die Weckrufempfangseinheit (305), ob in der Weckanforderung enthaltene persönliche Information eine vordefinierte persönliche Bedingung erfüllt oder nicht, und wenn die persönliche Information die persönliche Bedingung nicht erfüllt, Ignorieren der Weckanforderung.

10. Software-Aktualisierungsverfahren für eine elektronische Vorrichtung (306) nach einem der Ansprüche 6 bis 9, ferner mit:
Prüfen durch die Weckrufempfangseinheit (305), ob in der Weckanforderung enthaltene Information der elektronischen Vorrichtung (306) eine vordefinierte Vorrichtungsbedingung erfüllt oder nicht, und wenn die Information der elektronischen Vorrichtung (306) die vordefinierte Vorrichtungsbedingung nicht erfüllt, Ignorieren der Weckanforderung.

11. Programm, das einen Computer veranlasst, das Verfahren nach einem der Ansprüche 6 bis 10 auszuführen.

## Revendications

1. Dispositif de mise à jour de logiciel (303) comprenant :
une unité de communication (304) connectée à un dispositif électronique (306) qui exécute le logiciel ;
une unité de réception de réveil (305) qui, lors de la réception d'une demande de réveil transmise par une unité de commande (308) dans un dispositif de serveur (301) à partir d'un point d'accès sans fil (302) enregistré à l'avance, autorise l'unité de communication (304) à passer d'un état de veille à un état de réveil, dans lequel
lorsque l'unité de communication (304) est passée à l'état de réveil, l'unité de communication (304) initie une communication sans fil avec l'unité de commande (308), reçoit le logiciel de mise à jour transmis par l'unité de commande (308) à partir du point d'accès sans fil (302), et met à jour le logiciel du dispositif électronique (306) par le logiciel de mise à jour reçu.

2. Dispositif de mise à jour de logiciel (303) selon la revendication 1, dans lequel
l'unité de réception de réveil (305) est configurée pour vérifier si un ID de réveil prédéfini est inclus ou non dans la demande de réveil, et lorsque l'ID de réveil prédéfini n'est pas inclus, ne pas tenir compte de la demande de réveil.

3. Dispositif de mise à jour de logiciel (303) selon la revendication 1 ou 2, dans lequel
l'unité de réception de réveil (305) est configurée pour vérifier si un moment où la demande de réveil est reçue satisfait ou non une condition temporelle prédéfinie, et lorsque le moment ne satisfait pas la condition temporelle prédéfinie, ne pas tenir compte de la demande de réveil.

4. Dispositif de mise à jour de logiciel (303) selon l'une quelconque des revendications 1 à 3, dans lequel
l'unité de réception de réveil (305) est configurée pour vérifier si des informations personnelles incluses dans la demande de réveil satisfont ou non une condition personnelle prédéfinie, et lorsque les informations personnelles ne satisfont pas la condition personnelle prédéfinie, ne pas tenir compte de la demande de réveil.

5. Dispositif de mise à jour de logiciel (303) selon l'une quelconque des revendications 1 à 4, dans lequel
l'unité de réception de réveil (305) est configurée pour vérifier si des informations du dispositif électronique (306) incluses dans la demande de réveil satisfont ou non une condition de dispositif prédéfinie, et lorsque les informations du dispositif électronique (306) ne satisfont pas la condition de dispositif prédéfinie, ne pas tenir compte de la demande de réveil.

6. Procédé de mise à jour de logiciel pour un dispositif électronique (306) destiné à être mis en oeuvre par un dispositif de mise à jour de logiciel (303) comportant une unité de réception de réveil (305) et une unité de communication (304) connectée au dispositif électronique (306) qui exécute le logiciel,
le procédé comprenant
par l'unité de réception de réveil (305), lors de la réception d'une demande de réveil transmise par une unité de commande (308) dans un dispositif de serveur (301) à partir d'un point d'accès sans fil (302) enregistré à l'avance, le fait d'autoriser l'unité de communication (304) à passer d'un état de veille à un état de réveil ; et
lorsque l'unité de communication (304) est passée à l'état de réveil, par l'unité de communication (304), l'initiation d'une communication sans fil avec l'unité de commande (308), la réception du logiciel de mise à jour transmise par l'unité de commande (308) à partir du point d'accès sans fil (302), et la mise à jour du logiciel du dispositif électronique (306) par le logiciel de mise à jour reçu.

7. Procédé de mise à jour de logiciel pour le dispositif électronique (306) selon la revendication 6, comprenant en outre
par l'unité de réception de réveil (305), le fait de vérifier si un ID de réveil prédéfini est inclus ou non dans la demande de réveil, et lorsque l'ID de réveil prédéfini n'est pas inclus, le fait de ne pas tenir compte de la demande de réveil.

8. Procédé de mise à jour de logiciel pour le dispositif électronique (306) selon la revendication 6 ou 7, comprenant en outre
par l'unité de réception de réveil (305), le fait de vérifier si un moment où la demande de réveil est reçue satisfait ou non une condition temporelle prédéfinie, et lorsque le moment ne satisfait pas la condition temporelle prédéfinie, le fait de ne pas tenir compte de la demande de réveil.

9. Procédé de mise à jour de logiciel pour le dispositif électronique (306) selon l'une quelconque des revendications 6 à 8, comprenant en outre
par l'unité de réception de réveil (305), le fait de vérifier si les informations personnelles incluses dans la demande de réveil satisfont ou non une condition personnelle prédéfinie, et lorsque les informations personnelles ne satisfont pas la condition personnelle, le fait de ne pas tenir compte de la demande de réveil.

10. Procédé de mise à jour de logiciel pour le dispositif électronique (306) selon l'une quelconque des revendications 6 à 9, comprenant en outre
par l'unité de réception de réveil (305), le fait de vérifier si les informations du dispositif électronique (306) incluses dans la demande de réveil satisfont ou non une condition de dispositif prédéfinie, et lorsque les informations du dispositif électronique (306) ne satisfont pas la condition de dispositif prédéfinie, le fait de ne pas tenir compte de la demande de réveil.

11. Programme pour amener un ordinateur à mettre en oeuvre le procédé selon l'une quelconque des revendications 6 à 10.
